# EUROPEAN PATENT APPLICATION

(11) **EP 4 391 277 A1**
(43) Date of publication of application: **26.06.2024**
(21) Application number: 22215073.2
(22) Date of filing: 20.12.2022
(51) Int. Cl.: H02J 7/00

(54) **METHOD FOR DISCONNECTING A BATTERY ARRANGEMENT FROM AN ELECTRONIC DEVICE, AND METHOD FOR OPERATING AN ELECTRONIC ARRANGEMENT**

(71) Applicant: ABB SCHWEIZ AG, 5400 Baden (CH)
(72) Inventor: Burkard, Johannes, 8046 Zurich (CH); Wicki, Stefan, 5702 Niederlenz (CH)
(74) Representative: Sykora & König Patentanwälte PartG mbB

(57) **Abstract**

A method for disconnecting a battery arrangement (22) from an electronic device (24) is provided. The battery arrangement (22) comprises two or more battery strings (30, 32, 34). The battery strings (30, 32, 34) are electrically coupled to the electronic device (24) in parallel. The method comprises disconnecting the battery strings (30, 32, 34) from the electronic device (24) one after the other in accordance with a predetermined temporal sequence until all of the battery strings (30, 32, 34) are disconnected from the electronic device (24).

## Description

### FIELD OF THE INVENTION

The invention relates to the field of battery arrangements. In particular, the invention relates to a method for disconnecting a battery arrangement from an electronic device, and to a method for operating an electronic arrangement, which comprises the battery arrangement and the electronic device.

### BACKGROUND OF THE INVENTION

An increasing number of vehicles, e.g. cars, trains, subways, busses, is equipped with battery cells, in particular high-performance battery cells. A typical standard or high-performance battery cell may have a nominal capacity between 1 Ah and 1000 Ah and may be used for driving the corresponding vehicle, in particular for providing energy to a power train of the corresponding vehicle.

Conventional high-performance battery cells may be encapsulated in battery modules, wherein the battery modules may be fully assembled as battery strings. Then, the battery strings may be combined in one battery arrangement, wherein the battery strings may be electrically coupled to each other in parallel. Each of the battery strings may comprise a separate switch for disconnecting the corresponding battery string from an electronic device which may be external with respect to the battery arrangement. This electronic device may be a load or a generator, or a converter, an inverter, or a rectifier, e.g. for coupling the battery arrangement to the load or the generator. The battery arrangements may be arranged in the vehicles, e.g. for driving the vehicles.

When the parallel battery strings are disconnected from the electronic device under load, a corresponding current does not split equally during this disconnection operation due to production tolerances of the corresponding switches. When the switch of a first battery string of the parallel battery strings opens, the current may quickly commutate to the remaining battery strings causing a negligible wear for all of the battery strings except for the last, or in other words "slowest" one. The switch of the last battery string to be disconnected has to break the complete current of the whole battery arrangement. This may cause an arc at the slowest switch and thereby a significant wear of this switch and as such of the corresponding battery string. However, which one of the switches is the last or slowest switch and as such which one of the battery strings is the last or slowest battery string, both underlying the largest wear compared to the other switches and battery strings, is generally unknown.

In addition, in the most cases, the battery arrangements are not designed to be removed easily, e.g. in order to check, maintain, and/or exchange one or more of the battery strings or its switches. In contrast, it is common practice that intense efforts have to be taken to check, maintain or exchange the battery strings and/or their switches, and/or to find out which battery string has caused a defect of the battery arrangement.

So, in case of maintenance and/or a defect of the battery arrangement, much effort may be involved for maintaining and/or exchanging all of the battery strings, in particular the corresponding switches, or for finding the battery string, in particular the corresponding switch, which comprises the largest wear, and which therefore may have to be exchanged and/or, respectively, which therefore caused the defect. This effort may involve a long time and/or high costs.

Further, normally always the same battery string and/or switch is the last, because of fixed product tolerances of the battery strings and, respectively, corresponding switches. This contributes to that the last battery string and the corresponding last switch wears very fast compared to all other battery strings and corresponding switches. This may contribute to relatively short maintenance intervals and/or a short lifetime of the corresponding switch and thereby of the corresponding battery string and of the battery arrangement.

### DESCRIPTION OF THE INVENTION

Therefore, it is an objective of the present invention to provide a method for disconnecting a battery arrangement from an electronic device, wherein the method may contribute to a long lifetime of the battery arrangement, and/or to quickly and/or easily maintain the battery arrangement, and/or to quickly and/or easily find that battery string of the battery arrangement, which has the largest wear.

Further, it is an objective of the present invention to provide a method for operating an electronic arrangement comprising the battery arrangement and at least one electronic device, wherein the method may contribute to a long lifetime of the electronic arrangement, and/or to quickly and/or easily maintain the electronic arrangement, and/or to quickly and/or easily find that battery string of the battery arrangement, which has the largest wear.

These objectives are achieved by the subject-matter of the independent claims. Further exemplary embodiments are evident from the dependent claims and the following description.

In particular, an objective of the present invention is achieved by a method for disconnecting a battery arrangement from an electronic device, wherein the battery arrangement comprises two or more battery strings and wherein the battery strings are electrically coupled to the electronic device in parallel. The method comprises disconnecting the battery strings from the electronic device one after the other in accordance with a predetermined temporal sequence until all of the battery strings are disconnected from the electronic device. This may contribute to that wear of the battery arrangement may be distributed over the battery strings over time in a known manner. This may contribute to an easy and quick maintenance of the battery arrangement, when necessary.

Each of the battery strings may comprise one or more battery modules, wherein each of the battery modules may comprise one or more battery cells and one or more electronic components for driving the battery cells. The battery cells may be high-performance battery cells having a nominal capacity between 1 Ah and 1000 Ah, e.g. between 20 Ah and 500 Ah, e.g. between 25 Ah and 100 Ah.

According to an embodiment, the temporal sequence is predetermined such that every time the battery strings are disconnected from the electronic device, the last battery string to be disconnected is one predetermined battery string of the battery strings. In other words, one of the battery strings may be predetermined to be the last one to be disconnected every time the battery arrangement is disconnected from the electronic device. This predetermined battery string may be referred to as "sacrificial battery string". This may contribute to that the wear of the battery arrangement is focused on the sacrificial battery string. So, after a predetermined time or if the battery arrangement has a failure, it is known with a very high reliability, which one of the battery strings has to be maintained, i.e. the sacrificial battery string. This may contribute to an easy and quick maintenance of the battery arrangement, and/or to a very low service effort when maintaining the battery arrangement, because the sacrificial battery string may be maintained and/or fully or partly exchanged first and because the remaining battery strings may be maintained and/or fully or partly exchanged later or not at all. Further, the sacrificial battery string may be formed and/or arranged such that it may be maintained and/or fully or partly exchanged easily compared to the other battery strings.

In this embodiment, the temporal sequence may stay the same over all or at least several disconnection operations. In this case, the temporal sequence may refer to one disconnection operation only, wherein the disconnection operation may refer to the disconnection of the battery arrangement from the electronic device. Alternatively, the temporal sequence may be altered such that the order of the battery strings to be disconnected is altered from one disconnection operation to the next disconnection operation, wherein only the sacrificial battery string stays the same, i.e. the last of the battery strings to be disconnected. In this case, the temporal sequence may refer to two or more of the disconnection operations, wherein the sacrificial string to be disconnected at last may be the fixpoint of the temporal sequence over these disconnection operations.

According to an embodiment, the temporal sequence is predetermined such that the last battery string to be disconnected from the electronic device is one of the battery strings in one disconnection operation and another one of the battery strings in another disconnection operation. This contributes to that the last battery string to be disconnected from the electronic device is not always the same of the battery strings, and that the last battery string to be disconnected from the electronic device is altered. This may contribute to a long lifetime of the battery strings and as such of the battery arrangement.

According to an embodiment, the temporal sequence is predetermined such that every time the battery arrangement is disconnected from the electronic device, the last battery string to be disconnected from the electronic device is another battery string than that one which has been disconnected from the electronic device at last the last time the battery arrangement has been disconnected from the electronic device, i.e. in the previous disconnection operation. In other words, the order according to which the battery strings are disconnected from the electronic device and the last battery string to be disconnected may change every time the battery arrangement is disconnected from the electronic device. This contributes to that the wear of the battery arrangement is distributed over all of the battery strings. This may contribute to that the lifetime of the battery strings and thereby of the battery arrangement is increased and/or that a maintenance interval for maintaining the battery arrangement may be very long. In this embodiment, the temporal sequence may refer to two or more of the disconnection operations, wherein the battery string to be disconnected at last may alter from one disconnection operation to the other disconnection operation.

According to an embodiment, the temporal sequence is predetermined such that when all of the battery strings have been the last battery string to be disconnected from the electronic device, e.g. for a given amount of times, the battery string to be disconnected at last is the same battery string which has been disconnected at last when the temporal sequence has been started the previous time. In other words, when each of the battery strings has been the last battery string to be disconnected for a time, the temporal sequence starts with disconnecting that battery string at last which has been disconnected at last firstly, and the temporal sequence may start again. This may contribute to that the wear is distributed over all of the battery strings, at least after the amount of disconnection operations equals the amount of battery strings.

According to an embodiment, the temporal sequence is predetermined such that over several disconnection operations it is equally distributed over all of the battery strings which of the battery strings has been the last one to be disconnected from the electronic device. For example, if the battery arrangement comprises a given number of battery strings, the temporal sequence may be predetermined such that after a given amount of disconnection operations each of the battery strings has been the last one to be disconnected for the amount divided by the number of battery strings. So, if the battery arrangement comprises for example three battery strings, the temporal sequence may be predetermined such that after for example 100 disconnection operations each of the battery strings has been the last one to be disconnected for about 33 times. This contributes to that the wear of the battery arrangement is distributed over all of the battery strings equally. This may contribute to that the lifetime of the battery strings and thereby of the battery arrangement may be long and/or that a maintenance interval for maintaining the battery arrangement may be very long.

According to an embodiment, each of the battery strings comprises a corresponding switch for disconnecting the corresponding battery string from the electronic device, wherein the battery strings are disconnected from the electronic device by opening the corresponding switch. In this embodiment, it is especially advantageous to disconnect the battery strings from the electronic device one after the other in accordance with the predetermined temporal sequence, because the switches are those parts of the battery strings which wear most when the battery strings are disconnected from the electronic device. So, disconnecting the battery strings from the electronic device one after the other by opening the corresponding switches in accordance with the predetermined temporal sequence may contribute to that the wear of the battery arrangement may be distributed over the switches of the battery strings over time in a known manner. This may contribute to an easy and quick maintenance of the switches and as such of the battery arrangement. The switches may be electronic switches.

According to an embodiment, each of the switches has an individual delay for disconnecting the corresponding battery string from the electronic device after being actuated, the predetermined temporal sequence comprises several consecutive time intervals, after each of the time intervals one of the switches is actuated, and each of the time intervals is larger than the maximum delay of all delays of the switches. This may contribute to that the switches disconnect the corresponding battery string from the electronic device in a manner which is predetermined by the predetermined temporal sequence. In particular, this may contribute to that the switches disconnect the corresponding battery string from the electronic device in the same order in which the switches are actuated, which is in accordance with the predetermined temporal sequence.

According to an embodiment, the switch is an electronic switch. The switch may be actuated mechanically or electronically. For example, the switch may be a contactor, a relay, a semiconductor switch, or a circuit breaker.

According to an embodiment, the electronic device is a generator, a load, a converter, an inverter, or a rectifier. For example, the electronic device may be an electrical machine which may be operated in a motor mode or in a generator mode, or the electronic device may be electrically coupled to the electrical machine.

An objective of the present invention is achieved by a method for operating an electronic arrangement, wherein the electronic arrangement comprises a battery arrangement and at least one electronic device, the method comprising: disconnecting the battery arrangement from the electronic device by the method in accordance with one of the preceding claims. The electronic device may be a part of the electronic arrangement but may be external with respect to the battery arrangement.

The above features, advantages and/or effects of the method for disconnecting a battery arrangement from an electronic device may be transferred to the method for operating an electronic arrangement. Therefore, a repetition of these features, advantages and/or effects is omitted and it is referred to the above explanations only in order to provide a concise description.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows a side view of an exemplary embodiment of a battery arrangement;
Fig. 2 schematically shows examples of a first current diagram, a voltage diagram, and an energy diagram;
Fig. 3 schematically shows an example of a second current diagram; and
Fig. 4 schematically shows an example of a third current diagram.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

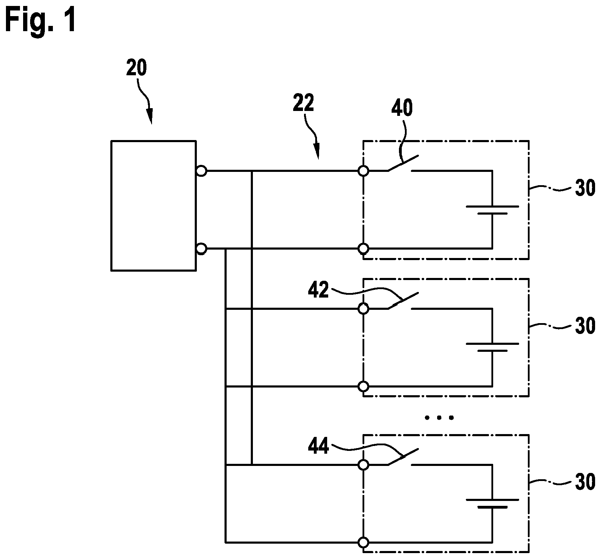

Fig. 1 schematically shows a side view of an exemplary embodiment of an electronic arrangement 20. For example, the electronic arrangement 20 may be arranged in a car, a train, a subway, a bus, etc. The electronic arrangement comprises a battery arrangement 22 and an electronic device 24.

The battery arrangement 22 comprises two or more battery strings, e.g. n battery strings, e.g. a first battery string 30, a second battery string 32, and an n^{th} battery string 34, wherein n is a natural number equal or larger than two. The battery strings 30, 32, 34 are electrically arranged in parallel. Each of the battery strings 30, 32, 34 may comprise one or more battery modules, with each of the battery modules comprising one or more battery cells. The battery arrangement 22 may be referred to as battery pack. The battery arrangement 22 may comprise a housing (not shown). The battery arrangement 22 may be configured for providing energy to an electric motor and/or to receive and store electric energy by a generator, wherein the battery arrangement 22 and/or the electronic device 24 may be electrically coupled to an electric machine which may be operated as the electric motor or as the generator. The battery cells may be high-performance battery cells. Each of the high-performance battery cells may have a nominal capacity between 1 Ah and 1000 Ah. The nominal capacity may be between 20 Ah and 500 Ah, e.g. between 25 Ah and 100 Ah.

Each of the battery strings 30, 32, 34 may comprise a switch. In particular, the first battery string 30 may comprise a first switch 40, the second battery string 32 may comprise a second switch 42, and the third battery string 34 may comprise a third switch 44. The switches 40, 42, 44 may be configured for disconnecting the corresponding battery string 30, 32, 34 from the electronic device 24, wherein the battery strings 30, 32, 34 may be disconnected from the electronic device 24 by opening the corresponding switch 40, 42, 44. The switches may be electronic switches. For example, the switches may be actuated mechanically or electronically. For example, each of the switches 40, 42, 44 may be a contactor, a relay or a circuit breaker.

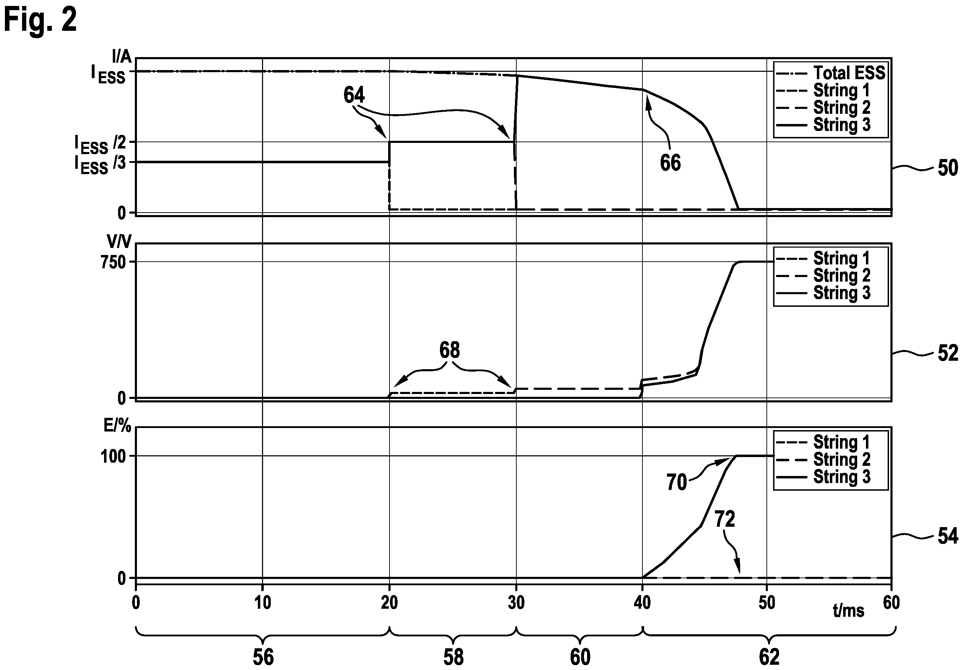

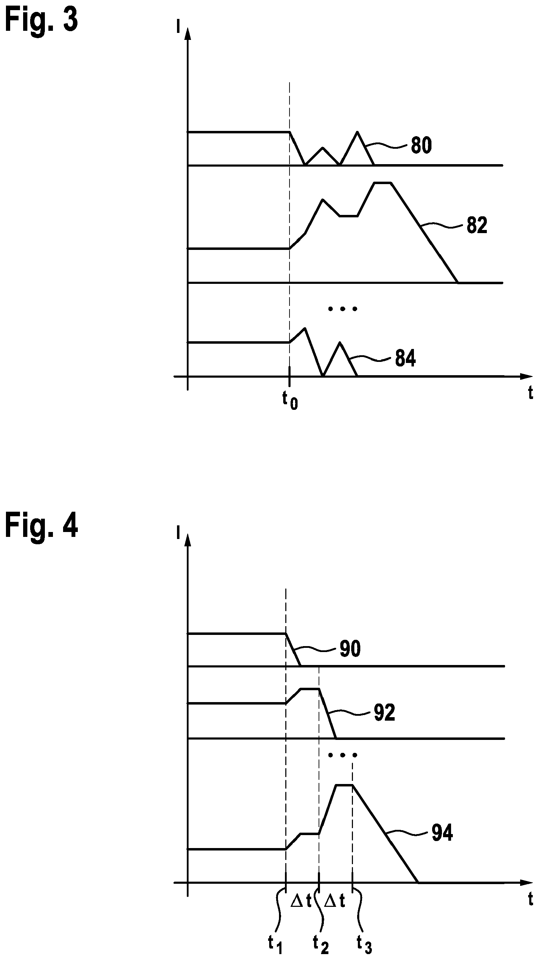

Each of the switches 40, 42, 44 may have an individual delay for disconnecting the corresponding battery string 30, 32, 34 from the electronic device 24 after being actuated. In fact, even if the same type of switch is used for all of the switches 40, 42, 44 their individual reaction times may differ from each other a little bit, because of production tolerances. So, even if the switches 40, 42, 44 are actuated simultaneously, in particular for disconnecting the corresponding battery string 30, 32, 34 from the electronic device 24, the switches 40, 42, 44 may disconnect the battery strings 30, 32, 34 one after the other. Because the production tolerances do not change or change in a similar way over the operating time of the switches 40, 42, 44, the switch 40, 42, 44 with the longest delay, in other words the "slowest" switch 40, 42, 44 may stay the same. However, the slowest switch 40, 42, 44 is not known in advance. This may lead to problems in case of a maintenance and/or failure of the battery arrangement 22, as explained in the introductory part of this application and in the following with respect to figures 2 and 3. Therefore, the battery arrangement 22 may be operated in accordance with a predetermined temporal sequence, as explained below and with respect to figure 4.

The electronic device 24 may be a load, e.g. the electric machine, a converter, an inverter, or a rectifier. The electronic device 24 is external with respect to the battery arrangement 22. The electronic arrangement 20 may comprise a battery management system (BMS) (not shown) for controlling the switches 40, 42, 44. For example, the battery arrangement 22, e.g. one or more of the battery strings 30, 32, 34, may comprise the BMS or a part of the BMS. Alternatively, the switches 40, 42, 44 may be controlled by a device (not shown) which is external with respect to the electronic arrangement 20.

Fig. 2 schematically shows examples of a first current diagram 50, a voltage diagram 52, and an energy diagram 54, each showing the corresponding parameter vs. time t. For the example represented by figure 2, it is assumed that the battery arrangement 22 comprises three battery strings 40, 42, 44 ("String 1", "String 2", and "String 3" in figure 2), so in this case the above-mentioned parameter n is 3.

The time-axis of the diagrams 50, 52, 54 is separated in several time intervals depending on the switches 40, 42, 44 which are connected to the electronic device 24. In particular, in a first time interval 56, all three battery strings 30, 32, 34 are connected to the electronic device 24 and the switches 40, 42, 44 are closed, wherein the switches 40, 42, 44 may be contactors, relays, or circuit breakers in this embodiment. In a second time interval 58, one of the battery strings 30, 32, 34 is disconnected from the electronic device 24 and the corresponding switch 40, 42, 44 is opened. In a third time interval 60, another one of the battery strings 30, 32, 34 is disconnected from the electronic device 24 and the corresponding switch 40, 42, 44 is opened. So, in the third time interval 60, two of the battery strings 30, 32, 34 are disconnected from the electronic device 24 and the corresponding two switches 40, 42, 44 are opened. In a fourth time interval 62, all of the battery strings 30, 32, 34 are disconnected from the electronic device 24 and all of the switches 40, 42, 44 are opened.

As may be seen from the first current diagram 50, a total current I_{ESS} over all three battery strings 30, 32, 34 is distributed equally over all of the three battery strings 30, 32, 34, as it is normal for battery strings 30, 34, 34 which are electrically arranged in parallel. So, each of the battery strings 30, 32, 34 carries one third of the total current less, i.e. I_{ESS}/3.

At the beginning of the second and third time intervals 58, 60 there is a commutation point 64 each. At each of the commutation points 64, one of the battery strings 30, 32, 34 is disconnected from the electronic device 24, in particular by an opening of the corresponding switch 40, 42, 44. At the time of these commutation points 64, the voltage diagram 52 shows a slight voltage increase 68, which is sufficient to push the current from the disconnected one of the battery strings 30, 32, 34 to firstly the remaining battery strings 30, 32, 34, and then to the last remaining battery string 30, 32, 34. So, in the second time interval 58, the two connected ones of the battery strings 30, 32, 34 ("String 2" and "String 3" in figure 2) carry the half of the total current I_{ESS}, i.e. I_{ESS}/2, and in the third time interval 60, the last connected one of the battery strings 30, 32, 34 ( "String 3" in figure 2) carries the total current less, i.e. I_{ESS}/2. A time which is needed to push the current from the disconnected battery string 30, 32, 34 to the remaining battery string(s) 30, 32, 34 may be several milliseconds, wherein 1 kA may be commutated in these several milliseconds.

At the beginning of the fourth time interval 62, the last one of the battery strings 30, 32, 34 is disconnected from the electronic device 24. At this time, the corresponding curve in the first diagram 50 shows a break point 66 at which the current drops from nearly the total current I_{ESS} towards zero. The voltage over the same battery string 30, 32, 34 ("String 3" in figure 2) correspondingly increases to its maximum value, e.g. 750 V in the example shown in figure 2.

The energy diagram 54 shows an energy distribution of an energy which is released, e.g. by a corresponding arc at the corresponding switch 40, 42, 44. As may be seen from the energy diagram 54, the energy of the corresponding arc is negligible in the first to third time intervals 56, 58, 60. In contrast, in the fourth time interval 62, the energy 70 at the last battery string 30, 32, 34 to be disconnected may jump up to almost 100 %, because the last battery string 30, 32, 34, in particular the last switch 40, 42, 44, to be opened ("String 3" in figure 2) has to break nearly 100 % of the current, which may cause an arc. In contrast, an arc having a very low energy only is created at the other battery strings 30, 32, 34 and the corresponding switches 40, 42, 44, resulting in a negligible energy 72 being generated at the battery strings 30, 32, 34 which have been disconnected previously. So, about 100 % of the energy is released by an arc at the switch 40, 42, 44 of the battery string 30, 32, 34 which is disconnected from the electronic device 24 at last.

In case of the switches 40, 42, 44 being semiconductor switches, no arcs are generated. However, the principal problem stays the same, because there are switching losses of energy when operating the switches 40, 42, 44, because these switching losses may lead to increasing temperatures of the switches 40, 42, 44, because the increasing temperatures may be disadvantageous and/or may contribute to a degradation of a performance and/or a shortening of the lifetime of the corresponding switches 40, 42, 44, and because these effects are the higher the higher the current is the corresponding switches 40, 42, 44 have to break. So, even when using semiconductor switches for the switches 40, 42, 44, it may be advantageous to operate them in accordance with the predetermined temporal sequence.

Fig. 3 schematically shows an example of a second current diagram. In particular, figure 3 shows the currents within the battery strings 30, 32, 34 in one single disconnection operation, in which all of the battery strings 30, 32, 34 are disconnected from the electronic device 24, as it is known in the prior art. The second current diagram shows a first curve 80 being representative for the current within the first string 30, a second curve 82 being representative for the current within the second string 32, and a third curve 84 being representative for the current within the n^{th} string 34.

At a time point t₀, all switches 40, 42, 44 are actuated simultaneously for disconnecting the corresponding battery strings 30, 32, 34 from the electronic device 24 simultaneously. However, as may be seen from figure 3, the currents within the battery strings 30, 32, 34 drop one after the other, because of the deviations and/or product tolerances, in particular individual delays, of the switches 40, 42, 44. Then, the currents have to be carried by the remaining battery strings 30, 32, 34, wherein the currents in the remaining battery strings 30, 32, 34 increase accordingly, as explained above with respect to figure 2. Then, at the end of the disconnection operation, the last or slowest one of the battery strings 30, 32, 34, which is the second battery string 32 in this example, has to firstly carry all the current and then the corresponding switch 42, which is the second switch 42 in this example, has to break all the current. This results in a high energy to be released at the last one of the battery strings 30, 32, 34, e.g. in form of an arc, wherein, according to the prior art, it is not known in advance, which one of the battery strings 30, 32, 34 and corresponding switches 40, 42, 44 is the last and/or slowest, and as such it is not known in advance, at which one of the switches 40, 42, 44 the arc having the high energy is generated. So, according to the prior art, it is not known in advance, which one of the battery strings 30, 32, 34 and corresponding switches 40, 42, 44 wears most and/or at the fastest.

Fig. 4 schematically shows an example of a third current diagram. In particular, figure 4 shows the currents within the battery strings 30, 32, 34 in another single disconnection operation, in which all of the battery strings 30, 32, 34 are disconnected from the electronic device 24 in accordance with the predetermined temporal sequence. The third current diagram shows a fourth curve 90 being representative for the current within the first string 30, a fifth curve 92 being representative for the current within the second string 32, and a sixth curve 84 being representative for the current within the n^{th} string 34.

At a first time point t₁, the first battery string 30 is disconnected from the electronic device 24, in particular by actuating the first switch 40. At a second time point t₂, the second battery string 32 is disconnected from the electronic device 24, in particular by actuating the second switch 42. At a third time point t₃, the n^{th} battery string 34 is disconnected from the electronic device 24, in particular by actuating the n^{th} switch 44. Optionally, the time points t₁, t₂, t₃ may be chosen such that a time difference Δt between the time points t₁, t₂, t₃ may be always the same. Advantageously, the time differences Δt are larger than the delay of the slowest battery string 30, 32, 34, in particular the slowest switch 40, 42, 44.

Again the currents commutate from the disconnected battery string(s) 30, 32, 34 to the remaining battery string(s) 30, 32, 34. However, because of the predetermined temporal sequence, it is known which battery string 30, 32, 34 and thereby which switch 40, 42, 44 is the last one to in fact be disconnected and, respectively, opened, i.e. the n^{th} battery string 34 and the switch 44 in this example. So, the predetermined temporal sequence may comprise several consecutive time intervals, and after each of the time intervals one predetermined one of the switches 40, 42, 44 may be actuated, wherein each of the time intervals may be larger than the maximum delay of all delays of the switches 40, 42, 44. So, because of the predetermined temporal sequence, the battery string 30, 32, 34 and/or the switch 40, 42, 44 which wears most and/or at the fastest may be known in advance.

A method for disconnecting the battery arrangement 22 from the electronic device 24 may comprise disconnecting the battery strings 30, 32, 34 from the electronic device 24 one after the other in accordance with the predetermined temporal sequence until all of the battery strings 30, 32, 34 are disconnected from the electronic device 24.

The temporal sequence may be predetermined such that every time the battery strings 30, 32, 34 are disconnected from the electronic device, in other words for each disconnection operation, the last battery string 30, 32, 34 to be disconnected is one predetermined battery string of the battery strings 30, 32, 34. In other words, one of the battery strings 30, 32, 34 may be predetermined to be the last one to be disconnected every time the battery arrangement 22 is disconnected from the electronic device 24. This predetermined battery string 30, 32, 34 may be referred to as sacrificial battery string, and may be the n^{th} battery string in the example presented by figure 4.

This contributes to that the wear of the battery arrangement 22 is focused on the sacrificial battery string only. So, after a predetermined time or if the battery arrangement 22 has a failure, it is known with a very high reliability, which one of the battery strings 30, 32, 34 has to be maintained and/or exchanged, i.e. the sacrificial battery string. Optionally, the sacrificial battery string may be formed and/or arranged such that it may be maintained and/or exchanged easily compared to the other battery strings 30, 32, 34.

In this embodiment, the temporal sequence may stay the same over all or at least several disconnection operations. In this case, the temporal sequence may refer to one disconnection operation only. Alternatively, the temporal sequence may be altered such that the order of the battery strings 30, 32, 34 to be disconnected is altered from one disconnection operation to the next disconnection operation, wherein only the sacrificial battery string stays the same. In this case, the temporal sequence may refer to two or more of the disconnection operations, wherein the sacrificial battery string to be disconnected at last may be the fixpoint of the temporal sequence over these disconnection operations.

Alternatively, the temporal sequence may be predetermined such that the last battery string 30, 32, 34 to be disconnected from the electronic device 24 is one of the battery strings 30, 32, 34 in one disconnection operation and another one of the battery strings 30, 32, 34 in another disconnection operation. So, the "last" battery string 30, 32, 34 may be altered such that the wear may be distributed over more than one battery string 30, 32, 34, independent from their individual delay.

For example, the temporal sequence may be predetermined such that every time the battery arrangement 22 is disconnected from the electronic device 24, the last battery string 30, 32, 34 to be disconnected from the electronic device 24 is another battery string 30, 32, 34 than that one which has been disconnected from the electronic device 24 at last the last time the battery arrangement 22 has been disconnected from the electronic device 24. In other words, the order according to which the battery strings 30, 32, 34 are disconnected from the electronic device 24 may change, e.g. every time, when the battery arrangement 22 is disconnected from the electronic device 24. This may contribute to that the wear of the battery arrangement 22 is distributed over all of the battery strings 30, 32, 34 and, in particular, switches 40, 42, 44. In this embodiment, the temporal sequence may refer to two or more of the disconnection operations, wherein the battery string 30, 32, 34 to be disconnected at last may alter from one disconnection operation to the other disconnection operation.

In particular, the temporal sequence may be predetermined such that when all of the battery strings 30, 32, 34 have been the last battery string 30, 32, 34 to be disconnected from the electronic device 24, e.g. for a given amount of times, the battery string 30, 32, 34 to be disconnected at last is the same battery string 30, 32, 34 which has been disconnected at last when the temporal sequence has been started the previous time. In other words, when each of the battery strings 30, 32, 34 has been the last battery string 30, 32, 34 to be disconnected for a time, the temporal sequence may start with disconnecting that battery string 30, 32, 34 at last which has been disconnected at last firstly, and the temporal sequence may start again.

Advantageously, the temporal sequence may be predetermined such that over several disconnection operations it is equally distributed over all of the battery strings 30, 32, 34 which of the battery strings 30, 32, 34 has been the last one to be disconnected from the electronic device 24. For example, if the battery arrangement 22 comprises a given number of battery strings 30, 32, 34, the temporal sequence may be predetermined such that after a given amount of disconnection operations each of the battery strings 30, 32, 34 has been the last one to be disconnected for the amount divided by the number of battery strings. So, if the battery arrangement 22 comprises for example the above three battery strings 30, 32, 34, the temporal sequence may be predetermined such that after for example 100 disconnection operations each of the battery strings 30, 32, 34 has been the last one to be disconnected for about 33 times. This contributes to that the wear of the battery arrangement 22 is distributed over all of the battery strings 30, 32, 34 equally.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: electronic arrangement
- 22: battery arrangement
- 24: electronic device
- 30: first battery string
- 32: second battery string
- 34: n^{th} battery string
- 40: first switch
- 42: second switch
- 44: n^{th} string
- 50: first current diagram
- 52: voltage diagram
- 54: energy diagram
- 56: first time interval
- 58: second time interval
- 60: third time interval
- 62: fourth time interval
- 64: commutation points
- 66: break point
- 68: voltage increase
- 70: energy of last string
- 72: energy of previous strings
- 80: first curve
- 82: second curve
- 84: third curve
- 90: fourth curve
- 92: fifth curve
- 94: sixth curve
- E: energy
- V: voltage
- I: current
- I_{ESS}: total current
- t: time
- t₀-t₃: time points
- Δt: time difference

## Claims

1. A method for disconnecting a battery arrangement (22) from an electronic device (24), wherein the battery arrangement (22) comprises two or more battery strings (30, 32, 34) and wherein the battery strings (30, 32, 34) are electrically coupled to the electronic device (24) in parallel, the method comprising:
disconnecting the battery strings (30, 32, 34) from the electronic device (24) one after the other in accordance with a predetermined temporal sequence until all of the battery strings (30, 32, 34) are disconnected from the electronic device (24).

2. The method in accordance with claim 1, wherein
the temporal sequence is predetermined such that every time the battery strings (30, 32, 34) are disconnected from the electronic device (24), the last battery string (30, 32, 34) to be disconnected is one predetermined battery string (30, 32, 34) of the battery strings (30, 32, 34).

3. The method in accordance with claim 1, wherein
the temporal sequence is predetermined such that the last battery string (30, 32, 34) to be disconnected from the electronic device (24) is one of the battery strings (30, 32, 34) in one disconnection operation and another one of the battery strings (30, 32, 34) in another disconnection operation.

4. The method in accordance with claim 3, wherein
the temporal sequence is predetermined such that every time the battery arrangement is disconnected from the electronic device, the last battery string to be disconnected from the electronic device is another battery string than that one which has been disconnected from the electronic device at last the last time the battery arrangement has been disconnected from the electronic device.

5. The method in accordance with one of claims 3 or 4, wherein
the temporal sequence is predetermined such that when all of the battery strings (30, 32, 34) have been the last battery string (30, 32, 34) to be disconnected from the electronic device (24), the battery string (30, 32, 34) to be disconnected at last is the same battery string (30, 32, 34) which firstly has been disconnected at last when the temporal sequence has been started the previous time.

6. The method in accordance with one of claims 3 to 5, wherein
the temporal sequence is predetermined such that over several disconnection operations it is equally distributed over all of the battery strings (30, 32, 34) which of the battery strings (30, 32, 34) has been the last one to be disconnected from the electronic device (24).

7. The method in accordance with one of the preceding claims, wherein
each of the battery strings (30, 32, 34) comprises a corresponding switch for disconnecting the corresponding battery string (30, 32, 34) from the electronic device (24); and
the battery strings (30, 32, 34) are disconnected from the electronic device (24) by opening the corresponding switch.

8. The method in accordance with claim 7, wherein
each of the switches has an individual delay for disconnecting the corresponding battery string from the electronic device after being actuated,
the predetermined temporal sequence comprises several consecutive time intervals,
after each of the time intervals one of the switches is actuated, and
each of the time intervals is larger than the maximum delay of all delays of the switches.

9. The method in accordance with claim 8, wherein
the switch is an electronic switch.

10. The method in accordance with one of the preceding claims, wherein
the electronic device (24) is a generator, a load, a converter, an inverter, or a rectifier.

11. A method for operating an electronic arrangement, wherein the electronic arrangement comprises a battery arrangement (22) and at least one electronic device (24), the method comprising:
disconnecting the battery arrangement (22) from the electronic device (24) by the method in accordance with one of the preceding claims.
